(19) Europäisches Patentamt
European Patent Office
Office européen des brevets

(11) **EP 3 961 448 B1**

(12) **EUROPEAN PATENT SPECIFICATION**

(45) Date of publication and mention
of the grant of the patent:
**04.03.2026 Bulletin 2026/10**

(21) Application number: **20916300.5**

(22) Date of filing: **31.01.2020**

(51) International Patent Classification (IPC):
*G06F 21/55* (2013.01)      *G06F 21/56* (2013.01)
*G06F 21/57* (2013.01)      *H04L 9/40* (2022.01)

(52) Cooperative Patent Classification (CPC):
**G06F 21/552; G06F 21/562; G06F 21/577;
H04L 63/1408; H04L 63/1416; H04L 63/1433;
H04L 63/145; H04L 63/1466; H04L 63/1491;
G06F 2221/034**

(86) International application number:
**PCT/RU2020/000044**

(87) International publication number:
**WO 2021/154114 (05.08.2021 Gazette 2021/31)**

(54) **METHOD AND SYSTEM FOR DETECTING AN INFRASTRUCTURE OF MALWARE OR A CYBERCRIMINAL**

VERFAHREN UND SYSTEM ZUR ERKENNUNG EINER INFRASTRUKTUR EINES SCHADPROGRAMMS ODER EINES CYBERKRIMINELLEN

PROCÉDÉ ET SYSTÈME POUR RÉVÉLER UNE INFRASTRUCTURE DE PROGRAMME MALVEILLANT OU DE CYBER-DÉLINQUANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2020 RU 2020103269**

(43) Date of publication of application:
**02.03.2022 Bulletin 2022/09**

(73) Proprietor: **GROUP-IB GLOBAL PRIVATE LIMITED 068900 Singapore (SG)**

(72) Inventors:
• **VOLKOV, Dmitry Aleksandrovich Moscow, 115563 (RU)**
• **MILESHIN, Philipp Alekseevich Moscow, 127474 (RU)**

(74) Representative: **Pribic, Jelena MSA IP - Milojevic, Sekulic & Associates Bulevar Mihajla Pupina 6 11070 Beograd (RS)**

(56) References cited:
EP-A1- 3 297 248      WO-A1-2006/075825
US-A1- 2010 154 059      US-A1- 2011 083 180
US-A1- 2013 145 471      US-A1- 2016 366 099
US-A1- 2019 253 366

**Description**

FIELD

This technical solution relates to a computer engineering field, in particular, to the method and system for malware or cybercriminal infrastructure detection.

BACKGROUND

The prior art discloses a solution RU2523114C2 (IPC G06F21/51, publ. 20.07.2014) describing a method for detecting middleman nodes in the computer network, through which malwares are distributed, wherein middleman nodes are connected to Internet, where malicious nodes are also connected to. This method uses a set of computational means, services for detecting traffic route in the network, WHOIS service of access to registration data on domain or IP address owner followed by plotting a graph of malware distribution from malicious site through data link channels, assess link channel usage rate for malware distribution, detect and lock intermediate middleman node used for illegal acts, unlocking of middleman node is additionally provided, if in time the malware distribution rate significantly decreases or the site containing the malware stops constituting a danger. This solution plots traffic route graphs and detects malicious "middlemen" in this traffic.

The claimed solution does not provide for analysis of traffic routes, and also WHOIS, Trace route services are used only to check communication with already known malicious nodes.

The prior art discloses a solution US20080244744A1 (IPC G06F21/00, publ. 02.10.2008) describing a method of tracing the traffic incoming to a website through a computer network, and identification of at least one rule from the traffic connected to the computer network to detect a malicious host connected to the computer network. The method includes associate of the first IP address and the first hardware footprint with the malicious host assertions, and storage of information related to the malicious host in at least one memory cell of the database. The method also includes identification of unknown host from the second website, defining the second IP address and the second hardware footprint with the unknown host, and determining whether the unknown host is the malicious host. This solution monitors traffic and it outputs a list of malicious footprints which the new hosts are compared to.

The claimed solution does not provide for analysis of traffic routes, and it outputs a rule. The core value is namely in this rule. Each new rule enables to detect malicious infrastructure. What is more, the infrastructure which is working now, and the one which had worked a year ago and then was permanently switched off, and even the one which does not exist yet and is only planned by a criminal (because he/she will "burn" his/her preferences, which are considered by the rule, again when assembling the infrastructure).

The prior art also discloses a solution RU2634209C1 (IPC G06F 21/55, publ. 24.10.2017) describing a method of automatic generation of decision rules for feedback intrusion detection systems, which is executed at the server. This method includes at least the following steps: obtaining at least one event from the event database formed by data obtained from at least one sensor; analyzing the obtained at least one event for membership in the class of interaction with malware control centers; extracting of at least one feature used for forming the decision rules from at least one above event relating to the class of interaction with malware control centers; forming the decision rules using at least one above extracted feature; storing the formed decision rules and providing an ability to receive updates of decision rules for at least one sensor; the sensors cyclically check availability of updates at the central node, and as the updates are available, the sensors receive them for use, and when the updates are received, the sensor trigger operates and reload the decision rules. This solution forms the decision rule according to the traffic and detects features of malwares in it.

US 2019/253366 A1 discloses a method for detecting associations between network resources to identify potential malicious activity. The method comprises scanning a network to identify a first and a second network resource, retrieving information associated with each resource, including at least one parameter for the first and at least one parameter for the second. Upon detecting a match between these parameters, the method determines that a connection exists between the first and second network resources.

EP 3 297 248 A1 discloses generating rules for detecting attacks. An event is received from an event database. If the event does not belong to a known class of malware control center interactions, at least one attribute is extracted. Decision rules are generated based on the extracted at least one attribute. The decision rules are saved and can be later updated.

WO 2006/075825 A1 discloses a method for detecting and indicating maliciuos game users and indicating them to the system. A group of users using similar virtual IP addresses may be marked as malicious if one of them engages in malicious behavior.

As detailed above, the traffic is not analyzed in the claimed solution at all, and nothing is known about features from the traffic. That is the most important difference of the claimed solution from the solutions known in the art.

# EP 3 961 448 B1

## SUMMARY

Technical problem, for solving of which the claimed technical solution is intended, is creation of a computer-implementable method and system for malware or cybercriminal infrastructure detection, which are defined in the independent claims. Additional variants of this technique implementation are presented in the dependent claims.

The technical result consists in increasing the efficiency of cyberattacks detection.

The claimed result is achieved due to implementation of the computer-implementable method for malware or cybercriminal infrastructure detection.

The invention is disclosed in the independent claims. Preferred embodiments of the invention are described in the dependent claims.

## DESCRIPTION OF THE DRAWINGS

Implementation of the method will be further described in accordance with the attached drawings, which are presented to clarify the method chief matter and by no means limit the field of the technique. The following drawings are attached to the application:

Fig. 1 illustrates computer-implementable method for malware or cybercriminal infrastructure detection;
Fig. 2 illustrates the example of the computer device schematic diagram.

## DETAILED DESCRIPTION

Numerous implementation details intended to ensure clear understanding of this technique are listed in the detailed description of the technique implementation given next. However, it is obvious to a person skilled in the art how to use this technique as with the given implementation details as without them. In other cases, the well-known methods, procedures and components have not been described in details so as not to obscure unnecessarily the present technique.

Besides, it will be clear from the given explanation that the technique is not limited to the given implementation. Numerous possible modifications, changes, variations and replacements retaining the chief matter and form of this technique will be obvious to persons skilled in the art.

Terms and concepts required for implementation of this technical solution are described below.

**Malware or cybercriminal infrastructure** means the following used at malware running or cybercriminal activity: IP addresses, domain names, SSL certificates, servers (specially configured software) and web services, e-mail addresses, telephone numbers.

**Infrastructure element parameters** mean the parameters attributable to each infrastructure element of this type. For example, the parameters characterizing such infrastructure element as web service are number of port where this service is started, date and time of its start, and also date and time of its stop.

Some parameters are specific to particular type elements, for example, name of registrar company is specific to a parameter of "domain name" type. Other parameters could be complex, i.e. in turn be additionally characterized by several parameters. Thus, for example, such specific parameter of IP address element as hosting provider is additionally characterized by geographic location, set of web services and servers available to hosting provider clients, range of IP addresses belonging to this hosting provider, etc.

**Statistical relationship** between infrastructure elements means arithmetical, logical or other correspondence enabling to detect in the database, based on known relations between parameters of one-type infrastructure elements, one more one-type infrastructure element, which same-name parameters are linked to the parameters of known elements with the same relation.

For example, there are known IP addresses 11.22.33.44 and 55.66.77.88 issued by hosting provider Provider, LLC on the same day, 11.11.2011, to the client with contact address client@mail.com and contact phone +1(099) 100-100-10. Statistical relationship between these two IP addresses and the third IP address 99.00.22.11, issued on some other day, for example, 12.12.2012, is that they are issued by the same hosting provider Provider, LLC to the client with the same contact address client@mail.com but with the other contact phone +1(059)200-200-20.

**Rule of searching new infrastructure elements** means a decision rule able to select in the known structure database the occurrences which satisfy the specified conditions, for example, all IP addresses issued by the specified hosting provider on the same day. The rule could be implemented as a script, regular expression, as a machine-learned classifier, etc. This technique is intended to provide the computer-implementable method and system for malware or cybercriminal infrastructure detection.

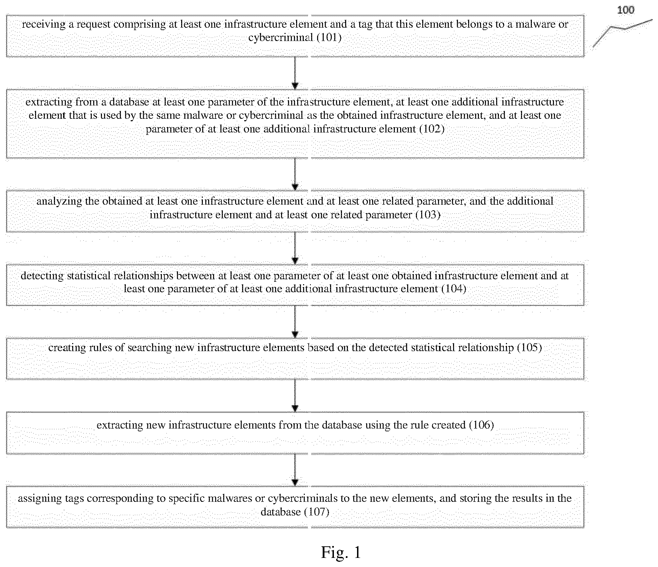

As detailed below in Fig. 1, the claimed computer-implementable method for malware or cybercriminal infrastructure detection (100) is implemented as follows:

At step (101) there is receiving a request comprising at least one infrastructure element and tag of this element belonging to a malware or cybercriminal.

Infrastructure elements could be, for example, IP address, domain name, SSL certificate, server, web service, e-mail address, telephone number. Conventional or common name of a malware or cybercriminal, for example, Zeus malware, could be used as information about this element belonging to a malware or cybercriminal.

The above information enters the request processing module configured to extract such information. The request processing module communicates with request sources by wire and/or wireless connection.

The sources of incoming requests could be, for example, but not limited to, sandbox (dedicated environment for program safe running) or malware detonation platform, vulnerability scanner, different honeypots (resource attracting the cybercriminal), intrusion detection system, system of emergency response to cyber security incidents.

It is the vulnerability scanner that is used to take footprints from the services deployed at remote server ports. The vulnerability scanner as such could be implemented by any common method.

All the listed programs and systems could be as inside one intranet with a system implementing the method, as at remote servers with Internet communication between them.

The request sources could also be systems of emergency response to cyber security incidents, CERT (Computer Emergency Response Team), automatically informing about malicious activity in the monitored networks, remote computers, which owners send data on detection of malwares in their computers to the specified e-mail address, mobile phones, which owners send SMS or MMS containing data on malware running to the specified number.

The source of incoming requests could also be a system operator receiving the corresponding information by phone or e-mail and inputting it in the incoming request processing module interface.

The request processing module extracts from the request the information about malware or cybercriminal infrastructure element, and also information about this element belonging to a malware or cybercriminal, and transmits it to the data extraction module.

For example, the sandbox has sent a request containing information that Zeus malware sends data from the infected computer to the server with the domain bad-domain.com, wherein this domain current IP address is 11.22.33.44. The request processing module extracts the listed information from the request and transmits Zeus tagged domain name bad-domain.com and Zeus tagged IP address 11.22.33.44 to the data extraction module. That is the end of the first step.

Further, at step (102) there is extracting from the database at least one parameter of the obtained infrastructure element, at least one additional infrastructure element used by the same malware or cybercriminal that the obtained infrastructure element is used by, and at least one parameter of at least one additional infrastructure element.

The data extraction module configured to communicate with the request processing module, analytical module and database receives from the request processing module at least one infrastructure element belonging to a malware or cybercriminal, and also information about this element belonging to the specific malware or cybercriminal (tag).

The data extraction module searches for all records comprising such infrastructure element and also this tag in the database.

The database itself and the search in it could be implemented by any known method, for example, as this is described in the patent RU2681699. Similarly to the method described in the patent, the database information could be structured as a table illustrating relationship between at least the following parameters so that at least one of the following parameters corresponds to each infrastructure element, for example, domain name: tag, IP address, SSL key, SSH footprint, list of running services, history of running services, history of domain names, history of IP addresses, history of DNS servers, history of domain name or IP address owners.

The parameters could also include DNS resource records which are records on compliance of name and service information in the domain name system.

Data could be stored in one or several bases or tables. In general, search is carried out by traditional methods: one or multiple request to these bases/tables and search for intersections of results.

For example, as a result of search for domain name bad-domain.com nothing was found in the database, during search for IP address 11.22.33.44 nothing was found in the database, but during search for Zeus tag the IP address 55.66.77.88 also Zeus tagged before is found in the database.

This step is finished, and the data extraction module proceeds to the next step.

The data extraction module extracts from the database all the parameters related to the infrastructure elements found in the database.

In the given example, for IP address 55.66.77.88 found in the database there will be extracted, for example: domain name another-bad-domain.net, name of this IP address owner - Provider, LLC, name of this domain name registrar - Registrar, LLC, date of issue of this IP address - 11.11.2011, date of registration of this domain name - 22.12.2011, e-mail of the client to whom this IP address was issued - client@mail.com and client's contact phone number: +1(099) 100-100-10.

If some infrastructure elements are not found in the database at the second step, the data extraction module extracts the parameters associated with such infrastructure elements from the online sources available. It could be done using, for example, Whois online service or any known program fit for purpose, for example, nslookup program.

In this case, the data extraction module can, for example, automatically send the corresponding search request to Whois online service and extract the required data from Whois online service response or from a web page with the search request results. The latter could be done by making use of, for example, a special parser integrated into the data extraction module and analyzing, for example, the text of Whois online service response or html code of the specified web page.

In the given example for IP address 11.22.33.44 and domain name bad-domain.com the following could be extracted by the described method: name of this IP address owner - Provider, LLC, name of this domain name registrar - AnotherRegistrar, LLC, date of issue of this IP address - 11.11.2011, date of registration of this domain name - 23.12.2011, e-mail of the client to whom this IP address was issued - anotherclient@mail.com and client's contact phone number: +1(099)300-300-30.

The data extraction module stores these parameters in the database together with the reference to the relationship between the said parameters, IP address 11.22.33.44, domain name bad-domain.com, Zeus tag, and also a date of delivery of the specified infrastructure elements and a source from which they have been delivered (in this case - identifier of the sandbox where Zeus malware activity was detected in the example in question).

Then the data extraction module transmits the found infrastructure elements and related parameters to the analytical module.

At step (103) there is analyzing the obtained at least one infrastructure element and at least one related parameter, and additional infrastructure element and at least one related parameter.

In the given example the following will be transmitted to the analytical module: domain names bad-domain.com and another-bad-domain.net, IP addresses 11.22.33.44 and 55.66.77.88, names of this IP address owners (they are the same in our example), names of this domain name registrars - Registrar, LLC and AnotherRegistrar, LLC, dates of issue of each IP address (they are the same in our example), dates of registration of each domain name, 22.12.2011 and 23.12.2011, client's e-mail addresses, contact phone numbers and also Zeus tag. This step is finished.

At step (104) there is detecting, based on the analysis, the statistical relationships between at least one parameter of at least one obtained infrastructure element and at least one parameter of at least one additional infrastructure element.

Analytical module configured to communicate with the data extraction module and rule building module receives infrastructure elements and their related parameters from the data extraction module.

Based on these data the analytical module builds statistical relationships, i.e. arithmetical, logical or other correspondence enabling to detect in the database, based on known relations between parameters of one-type infrastructure elements, at least one more one-type infrastructure element, which same-name parameters are linked to the parameters of known elements with the same relation.

For example, the analytical modules detect that:

- the obtained IP addresses belong to one and the same owner, Provider, LLC,
- both IP addresses have been issued on the same day, 11.11.2011,
- client's e-mail addresses, although belong to different accounts, client@mail.com and anotherclient@mail.com, are registered at one and the same mail server mail.com.

Correspondingly, the detected statistical relationship in this example could be recorded by the following simple logical expression:

$$\text{IP ADDRESS\_OWNER="Provider, LLC"\_}\wedge\text{\_IP}$$

$$\text{ADDRESS\_ISSUE\_DATE="11.11.2011"\_}\wedge\text{\_CLIENT\_EMAIL="*@mail.com",}$$

where $\wedge$ - conjunction operator, logical AND, * - so called wildcard character, which means that any number of any consecutive characters without spaces could be in its place.

Hereinafter, statistical relationship features mean the infrastructure elements of parameters of infrastructure elements which combination enables to build the detected statistical relationship.

In the above example this is the name of IP addresses owner (provider), IP address issue date and part of the client's e-mail address.

The given example is simple itself, in more complex example the analytical module could receive for analysis a list of several hundreds of IP addresses registered at different times at different providers and not related to repeated or similar domain names, and also a list of running services interrelated with each of these IP addresses, and a list of running services history. When such data are analyzed by the analytical module, more complex statistical relationship could be detected. For example, there could be detected such fact that at each of these IP addresses Apache HTTP server was started at least once, which run for 48 hours and was stopped, and immediately after it stops the e-mail server CommuniGate Pro version 5.1 was started at the same IP address with XIMSS API interface support.

Detection of statistical relationships described above could be performed by machine learning algorithms.

When all statistical relationships are detected, this step is finished, and the analytical module proceeds to the next step. Also, in one of the possible alternative embodiments the analytical module can transmit data on the detected statistical relationship to the data extraction module.

At step (105) there is creating the rules of searching new infrastructure elements based on the detected statistical relationship.

At this step the analytical module builds a rule of searching new infrastructure elements on the basis of the detected features of statistical relationships.

In the alternative embodiment the new rule of searching new infrastructure elements is built by the data extraction module on the basis of the data on the detected features of statistical relationships received from the analytical module.

The rule is based on the set of features with respect to which it has been detected at the previous step that they cumulatively represent the detected statistical relationship. The rule itself is such set of features described in some formal pseudolanguage.

SQL, Python, etc. could be mentioned as non-limiting examples of a formal pseudolanguage.

Data, as stated above, could be stored in one or several bases/tables. Search is carried out by one or multiple requests to these bases/tables and search for intersections of results.

If a rule is written for one feature, for example, for a footprint of a specific service, such as e-mail server CommuniGate Pro version 5.1, the search will be carried out in one base/table where namely footprints of different services are stored.

If a rule is complex and comprises features of domains, certificates, etc., the requests will be submitted to different bases/tables, and then search for intersections of results is carried out.

For example, according to a complex rule there could be carried out a search for all domains registered by AAAA registrar, wherein each of them (domains) has a certificate issued by BBBB company, and also each of the domains ever had IP address at which Apache HTTP had ever been started.

The analytical module transmits the new rule to the data extraction module, and this step is finished.

In case, if the new rule of searching new infrastructure elements has been built by the data extraction module, it directly proceeds to the new step.

At step (106) there is extracting new infrastructure elements from the database using the created rule.

The data extraction module searches in the database for all records satisfying the conditions described by the new search rule.

In the example in question as a result of the search in the database there could be detected a new IP address 99.00.22.11 without Zeus tag but issued by the same hosting provider Provider, LLC to the client with the contact address thirdclient@mail.com on the same day 11.11.2011 as the previous two Zeus tagged IP addresses.

This step is finished.

At step (107) there is assigning tags corresponding to specific malwares or cybercriminals to the new elements, and storing the results in the database.

In this case the data extraction module assigns Zeus tag to the found IP address and stores the result in the database. Thus, a new infrastructure element used by this malware is detected.

It is worth noting that such algorithm allows to detect "sleeping", i.e. already created but never used yet, infrastructure elements of malwares or cybercriminals.

In the given example the found IP address 99.00.22.11 and related domain name could have been created by developers of Zeus malware beforehand, however, they remain undetected by any cyber security means until the described moment, since the malware has never addressed this server yet.

Without direct reference to the above steps there is also continuous updating of the above-mentioned database. The following actions are performed for database updating.

Continuous Internet scanning and taking footprints from the started services at open ports. At the same time collecting data on domains related to the found servers.

Taking footprints from the services started at remote server ports is carried out by a vulnerability scanner which could be implemented by any known method.

Scanning results are arranged and placed into the database.

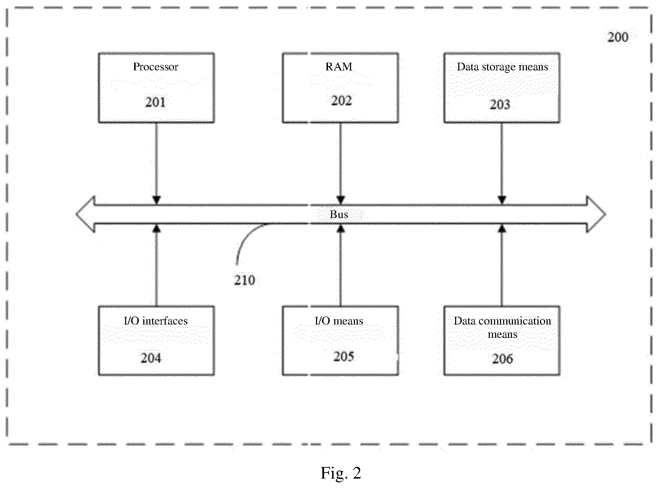

In Fig. 2 hereafter there will be presented the schematic diagram of the computer device (200), processing the data, required for embodiment of the claimed solution.

In general, the device (200) comprises such components as: one or more processors (201), at least one memory (202), data storage means (203), input/output interfaces (204), input/output means (205), networking means (206).

The device processor (201) executes main computing operations, required for functioning the device (200) or functionality of one or more of its components. The processor (201) runs the required machine-readable commands, contained in the random-access memory (202).

The memory (202), typically, is in the form of RAM and comprises the necessary program logic ensuring the required functional.

The data storage means (203) could be in the form of HDD, SSD, RAID, networked storage, flash-memory, optical drives (CD, DVD, MD, Blue-Ray disks), etc. The means (203) enables to store different information, e.g. the above-mentioned files with user data sets, databases comprising records of time intervals measured for each user, user identifiers, etc.

The interfaces (204) are the standard means for connection and operation with server side, e.g. USB, RS232, RJ45, LPT, COM, HDMI, PS/2, Lightning, FireWire, etc.

Selection of interfaces (204) depends on the specific device (N00), which could be a personal computer, mainframe, server cluster, thin client, smartphone, laptop, etc.

Keyboard should be used as data input/output means (205) in any embodiment of the system implementing the described method. There could be any known keyboard hardware: it could be as an integrated keyboard used in a laptop or netbook, as a separate device connected to a desk computer, server or other computer device. Provided that, the connection could be as hard-wired, when the keyboard connecting cable is connected to PS/2 or USB-port, located on the desk computer system unit, as wireless, when the keyboard exchanges data over the air, e.g. radio channel with a base station, which, in turn, is connected directly to the system unit, e.g. to one of USB-ports. Besides a keyboard the input/output means could also include: joystick, display (touch-screen display), projector, touch pad, mouse, trackball, light pen, loudspeakers, microphone, etc.

Networking means (206) are selected from a device providing network data receiving and transfer, e.g. Ethernet-card, WLAN/Wi-Fi module, Bluetooth module, BLE module, NFC module, IrDa, RFID module, GSM modem, etc. Making use of the means (205) provides an arrangement of data exchange through wire or wireless data communication channel, e.g. WAN, PAN, LAN, Intranet, Internet, WLAN, WMAN or GSM.

The components of the device (200) are interconnected by the common data bus (210).

The application materials have represented the preferred embodiment of the claimed technical solution, which shall not be used as limiting the other particular embodiments, which are not beyond the claimed scope of protection and are obvious to persons skilled in the art.

**Claims**

1. A computer-implemented method for malware or cybercriminal infrastructure detection, the method comprising:

   • receiving a request comprising at least one infrastructure element and a tag that this element belongs to a specific malware or cybercriminal;
   • extracting from a database at least one parameter of the infrastructure element, at least one additional infrastructure element that is used by the same specific malware or cybercriminal as the obtained infrastructure element, and at least one parameter of the at least one additional infrastructure element;
   • analyzing the obtained at least one infrastructure element and the at least one related parameter, and the additional infrastructure element and the at least one related parameter;
   • detecting, based on the analysis, statistical relationships between the at least one parameter of the at least one obtained infrastructure element and the at least one parameter of the at least one additional infrastructure element;
   • creating rules of searching new infrastructure elements based on the detected statistical relationship;
   • extracting new infrastructure elements from the database using the created rule; and
   • assigning tags corresponding to the specific malware or cybercriminal to the new elements, and storing the results in the database.

2. The method of claim 1, wherein the parameters of the malware or cybercriminal infrastructure elements are at least one of:

   • IP address;
   • domain name;
   • SSL certificate;
   • server;
   • web service;
   • e-mail address;
   • telephone number.

3. The method of claim 1, wherein the database is continuously updated with data obtained by Internet scanning.

4. The method of claim 3, wherein the Internet scanning is performed by at least one vulnerability scanner.

5. The method of claim 1, wherein a conventional or common name of the specific malware or cybercriminal is used as the tag.

6. The method of claim 1, wherein the request comprising at least one infrastructure element is received from at least one of the following sources:

- sandbox;
- malware detonation platform;
- vulnerability scanner;
- honeypot;
- intrusion detection system;
- system of emergency response to cyber security incidents.

7. The method of claim 1, wherein the statistical relationships are detected by machine learning algorithms.

8. The method of claim 1, wherein the statistical relationship represents at least two parameters combined by at least one logic operation, wherein each of the parameters belongs to at least two different infrastructure elements.

9. The method of claim 1, wherein the created rules are stored and configured to receive rule updates.

10. A system for malware or cybercriminal infrastructure detection, the system comprising:

- a database module, the database module being configured to store infrastructure elements, parameters of infrastructure elements and tags that these elements belong to malwares or cybercriminals;
- a request processing module, the request processing module is configured to:

  • receive a request comprising at least one infrastructure element and a tag that this infrastructure element belongs to a specific malware or cybercriminal; and
  • extract from the request information about the malware or cybercriminal infrastructure element, and information that this infrastructure element belongs to the specific malware or cybercriminal;

- a data extraction module, the data extraction module being configured to:

  • receive from the request processing module at least one infrastructure element belonging to the specific malware or cybercriminal, and also the tag that this infrastructure element belongs to the specific malware or cybercriminal;
  • extract from the database at least one parameter of the obtained infrastructure element, at least one additional infrastructure element that is used by the same malware or cybercriminal as the obtained infrastructure element, and at least one parameter of the at least one additional infrastructure element;
  • extract new infrastructure elements from the database using a rule created in an analytical module; and
  • assign tags corresponding to the specific malware or cybercriminal to the new elements, and store the results in the database; and

- the analytical module, the analytical module being configured to:

  ■ analyze the obtained at least one infrastructure element and the at least one related parameter, and the additional infrastructure element and the at least one parameter related to the additional infrastructure element;
  ■ detect, based on the analysis, statistical relationships between the at least one parameter of the at least one obtained infrastructure element and the at least one parameter of the at least one additional infrastructure element; and
  ■ create rules of searching new infrastructure elements based on the detected statistical relationship.

**Patentansprüche**

1. Computerimplementiertes Verfahren zur Erkennung von Malware- oder Cyberkriminalitätsinfrastruktur, umfassend:

    • Empfangen einer Anfrage, umfassend mindestens ein Infrastrukturelement und ein Tag, dass dieses Element zu einer spezifischen Malware oder einem spezifischen Cyberkriminellen gehört;
    • Extrahieren aus einer Datenbank von mindestens einem Parameter des Infrastrukturelements, mindestens einem zusätzlichen Infrastrukturelement, das von derselben spezifischen Malware oder demselben spezifischen Cyberkriminellen wie das erhaltene Infrastrukturelement verwendet wird, und mindestens einem Parameter des mindestens einen zusätzlichen Infrastrukturelements;
    • Analysieren des erhaltenen mindestens einen Infrastrukturelements und des mindestens einen zugehörigen Parameters sowie des zusätzlichen Infrastrukturelements und des mindestens einen zugehörigen Parameters;
    • Erkennen, basierend auf der Analyse, statistischer Beziehungen zwischen dem mindestens einen Parameter des mindestens einen erhaltenen Infrastrukturelements und dem mindestens einen Parameter des mindestens einen zusätzlichen Infrastrukturelements;
    • Erstellen von Regeln zur Suche nach neuen Infrastrukturelementen basierend auf der erkannten statistischen Beziehung;
    • Extrahieren neuer Infrastrukturelemente aus der Datenbank unter Verwendung der erstellten Regel; und
    • Zuweisen von Tags, die der spezifischen Malware oder dem spezifischen Cyberkriminellen entsprechen, zu den neuen Elementen und Speichern der Ergebnisse in der Datenbank.

2. Verfahren nach Anspruch 1, wobei die Parameter der Malware- oder Cyberkriminalitätsinfrastrukturelemente mindestens eines aus der folgenden Gruppe sind:

    • IP-Adresse;
    • Domainname;
    • SSL-Zertifikat;
    • Server;
    • Webdienst;
    • E-Mail-Adresse;
    • Telefonnummer.

3. Verfahren nach Anspruch 1, wobei die Datenbank kontinuierlich mit Daten aktualisiert wird, die durch Internetscanning erhalten werden.

4. Verfahren nach Anspruch 3, wobei das Internetscanning von mindestens einem Schwachstellenscanner durchgeführt wird.

5. Verfahren nach Anspruch 1, wobei ein konventioneller oder gebräuchlicher Name der spezifischen Malware oder des spezifischen Cyberkriminellen als Tag verwendet wird.

6. Verfahren nach Anspruch 1, wobei die Anfrage, die mindestens ein Infrastrukturelement umfasst, aus mindestens einer der folgenden Quellen empfangen wird:

    • Sandbox;
    • Malware-Detonationsplattform;
    • Schwachstellenscanner;
    • Honeypot;
    • Eindringungserkennungssystem;
    • System zur Notfallreaktion auf Cybersicherheitsvorfälle.

7. Verfahren nach Anspruch 1, wobei die statistischen Beziehungen durch maschinelle Lernalgorithmen erkannt werden.

8. Verfahren nach Anspruch 1, wobei die statistische Beziehung mindestens zwei Parameter darstellt, die durch mindestens eine logische Operation kombiniert werden, wobei jeder der Parameter zu mindestens zwei verschiedenen Infrastrukturelementen gehört.

9. Verfahren nach Anspruch 1, wobei die erstellten Regeln gespeichert und so konfiguriert werden, dass Regelaktualisierungen empfangen werden.

10. System zur Erkennung von Malware- oder Cyberkriminalitätsinfrastruktur, umfassend:

- ein Datenbankmodul, wobei das Datenbankmodul so konfiguriert ist, dass es Infrastrukturelemente, Parameter von Infrastrukturelementen und Tags speichert, dass diese Elemente zu Malware oder Cyberkriminellen gehören;
- ein Anfrageverarbeitungsmodul, wobei das Anfrageverarbeitungsmodul so konfiguriert ist, dass es:

• eine Anfrage empfängt, die mindestens ein Infrastrukturelement und ein Tag umfasst, dass dieses Infrastrukturelement zu einer spezifischen Malware oder einem spezifischen Cyberkriminellen gehört; und
• aus der Anfrage Informationen über das Malware- oder Cyberkriminalitätsinfrastrukturelement extrahiert sowie Informationen, dass dieses Infrastrukturelement zu der spezifischen Malware oder dem spezifischen Cyberkriminellen gehört;

- ein Datenextraktionsmodul, wobei das Datenextraktionsmodul so konfiguriert ist, dass es:

• vom Anfrageverarbeitungsmodul mindestens ein Infrastrukturelement erhält, das zur spezifischen Malware oder zu dem spezifischen Cyberkriminellen gehört, sowie das Tag, dass dieses Infrastrukturelement zu der spezifischen Malware oder dem spezifischen Cyberkriminellen gehört;
• aus der Datenbank mindestens einen Parameter des erhaltenen Infrastrukturelements, mindestens ein zusätzliches Infrastrukturelement, das von derselben Malware oder demselben Cyberkriminellen wie das erhaltene Infrastrukturelement verwendet wird, und mindestens einen Parameter des mindestens einen zusätzlichen Infrastrukturelements extrahiert;
• neue Infrastrukturelemente aus der Datenbank unter Verwendung einer im Analytikmodul erstellten Regel extrahiert; und
• Tags, die der spezifischen Malware oder dem spezifischen Cyberkriminellen entsprechen, den neuen Elementen zuweist und die Ergebnisse in der Datenbank speichert; und

- das Analytikmodul, wobei das Analytikmodul so konfiguriert ist, dass es:

▪ das erhaltene mindestens eine Infrastrukturelement und den mindestens einen zugehörigen Parameter sowie das zusätzliche Infrastrukturelement und den mindestens einen zugehörigen Parameter des zusätzlichen Infrastrukturelements analysiert;
▪ basierend auf der Analyse statistische Beziehungen zwischen dem mindestens einen Parameter des mindestens einen erhaltenen Infrastrukturelements und dem mindestens einen Parameter des mindestens einen zusätzlichen Infrastrukturelements erkennt; und
▪ Regeln zur Suche nach neuen Infrastrukturelementen basierend auf der erkannten statistischen Beziehung erstellt.

## Revendications

1. Procédé mis en œuvre par ordinateur pour la détection de logiciels malveillants ou d'infrastructures cybercriminelles, le procédé comprenant :

• la réception d'une demande comprenant au moins un élément d'infrastructure et une balise indiquant que cet élément appartient à un logiciel malveillant ou cybercriminel spécifique ;
• l'extraction à partir d'une base de données d'au moins un paramètre de l'élément d'infrastructure, d'au moins un élément d'infrastructure supplémentaire qui est utilisé par le même logiciel malveillant ou cybercriminel spécifique que l'élément d'infrastructure obtenu, et d'au moins un paramètre de l'au moins un élément d'infrastructure supplémentaire ;
• l'analyse de l'au moins un élément d'infrastructure obtenu et de l'au moins un paramètre lié, et de l'élément d'infrastructure supplémentaire et de l'au moins un paramètre lié ;
• la détection, sur la base de l'analyse, de relations statistiques entre l'au moins un paramètre de l'au moins un élément d'infrastructure obtenu et l'au moins un paramètre de l'au moins un élément d'infrastructure supplémentaire ;

- la création de règles de recherche de nouveaux éléments d'infrastructure sur la base de la relation statistique détectée ;
- l'extraction de nouveaux éléments d'infrastructure de la base de données à l'aide de la règle créée ; et
- l'attribution de balises correspondant au logiciel malveillant ou cybercriminel spécifique aux nouveaux éléments et le stockage des résultats dans la base de données.

2. Procédé selon la revendication 1, dans lequel les paramètres du logiciel malveillant ou des éléments d'infrastructure cybercriminelle sont au moins l'un parmi :

- adresse IP ;
- nom de domaine ;
- certificat SSL ;
- serveur ;
- service Web ;
- adresse de courriel ;
- numéro de téléphone.

3. Procédé selon la revendication 1, dans lequel la base de données est continuellement mise à jour avec des données obtenues par balayage Internet.

4. Procédé selon la revendication 3, dans lequel le balayage Internet est réalisé par au moins un dispositif de balayage de vulnérabilité.

5. Procédé selon la revendication 1, dans lequel un nom conventionnel ou commun du logiciel malveillant ou cybercriminel spécifique est utilisé comme balise.

6. Procédé selon la revendication 1, dans lequel la demande comprenant au moins un élément d'infrastructure est reçue d'au moins l'une des sources suivantes :

- sandbox ;
- plateforme de détonation de logiciels malveillants ;
- dispositif de balayage de vulnérabilité ;
- honeypot ;
- système de détection d'intrusion ;
- système de réponse d'urgence aux incidents de cybersécurité.

7. Procédé selon la revendication 1, dans lequel les relations statistiques sont détectées par des algorithmes d'apprentissage automatique.

8. Procédé selon la revendication 1, dans lequel la relation statistique représente au moins deux paramètres combinés par au moins une opération logique, dans lequel chacun des paramètres appartient à au moins deux éléments d'infrastructure différents.

9. Procédé selon la revendication 1, dans lequel les règles créées sont stockées et configurées pour recevoir des mises à jour de règles.

10. Système de détection de logiciels malveillants ou d'infrastructures cybercriminelles, le système comprenant :

- un module de base de données, le module de base de données étant configuré pour stocker des éléments d'infrastructure, des paramètres d'éléments d'infrastructure et des balises indiquant que ces éléments appartiennent à des logiciels malveillants ou cybercriminels ;
- un module de traitement de demande, le module de traitement de demande est configuré pour :

- recevoir une demande comprenant au moins un élément d'infrastructure et une balise indiquant que cet élément d'infrastructure appartient à un logiciel malveillant ou cybercriminel spécifique ; et
- extraire, de la demande, des informations sur l'élément d'infrastructure cybercriminelle ou de logiciel malveillant, et des informations indiquant que cet élément d'infrastructure appartient au logiciel malveillant ou cybercriminel spécifique ;

- un module d'extraction de données, le module d'extraction de données étant configuré pour :

• recevoir, du module de traitement de demande, au moins un élément d'infrastructure appartenant au logiciel malveillant ou cybercriminel spécifique, et également la balise indiquant que cet élément d'infrastructure appartient au logiciel malveillant ou cybercriminel spécifique ;
• extraire, de la base de données, au moins un paramètre de l'élément d'infrastructure obtenu, au moins un élément d'infrastructure supplémentaire qui est utilisé par le même logiciel malveillant ou cybercriminel que l'élément d'infrastructure obtenu, et au moins un paramètre de l'au moins un élément d'infrastructure supplémentaire ;
• extraire de nouveaux éléments d'infrastructure de la base de données à l'aide d'une règle créée dans un module analytique ; et
• attribuer des balises correspondant au logiciel malveillant ou cybercriminel spécifique aux nouveaux éléments, et stocker les résultats dans la base de données ; et

- le module analytique, le module analytique étant configuré pour :

▪ analyser l'au moins un élément d'infrastructure obtenu et l'au moins un paramètre lié, et l'élément d'infrastructure supplémentaire et l'au moins un paramètre lié à l'élément d'infrastructure supplémentaire ;
▪ détecter, sur la base de l'analyse, des relations statistiques entre l'au moins un paramètre de l'au moins un élément d'infrastructure obtenu et l'au moins un paramètre de l'au moins un élément d'infrastructure supplémentaire ; et
▪ créer des règles de recherche de nouveaux éléments d'infrastructure sur la base de la relation statistique détectée.

100

receiving a request comprising at least one infrastructure element and a tag that this element belongs to a malware or cybercriminal (101)

extracting from a database at least one parameter of the infrastructure element, at least one additional infrastructure element that is used by the same malware or cybercriminal as the obtained infrastructure element, and at least one parameter of at least one additional infrastructure element (102)

analyzing the obtained at least one infrastructure element and at least one related parameter, and the additional infrastructure element and at least one related parameter (103)

detecting statistical relationships between at least one parameter of at least one obtained infrastructure element and at least one parameter of at least one additional infrastructure element (104)

creating rules of searching new infrastructure elements based on the detected statistical relationship (105)

extracting new infrastructure elements from the database using the rule created (106)

assigning tags corresponding to specific malwares or cybercriminals to the new elements, and storing the results in the database (107)

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2523114 C2
- US 20080244744 A1
- RU 2634209 C1
- US 2019253366 A1
- EP 3297248 A1
- WO 2006075825 A1
- RU 2681699